# EUROPEAN PATENT APPLICATION

(11) **EP 4 831 731 A1**
(43) Date of publication of application: **28.10.2026**
(21) Application number: 24908017.7
(22) Date of filing: 17.12.2024
(51) Int. Cl.: G02F 1/157, G02F 1/155, G02F 1/153

(54) **ELECTROCHROMIC DEVICE**

(30) Priority: 22.12.2023 KR 20230189621
(71) Applicant: Dongjin Semichem Co., Ltd., Incheon 22824 (KR)
(72) Inventor: BAEK, Jong Gyu, Seongnam-si, Gyeonggi-do 13486 (KR); SONG, Gi Hwan, Seongnam-si, Gyeonggi-do 13486 (KR)
(74) Representative: Grünecker Patent- und Rechtsanwälte PartG mbB
(86) International application number: PCT/KR2024/020507
(87) International publication number: WO 2025/135734

(57) **Abstract**

One embodiment of the present invention provides an electrode substrate comprising: a substrate; an engraved recess which is provided in the substrate; a first anti-reflection layer which is disposed in the recess; a first electrode layer which is disposed so as to cover the first anti-reflection layer and does not deviate in position from the upper portion of the recess; a second electrode layer which has an area overlapping the first electrode layer and is disposed at the upper surface of the substrate and the side surface of the recess; and a protection layer which is disposed at the recess so as to cover at least a portion of the second electrode layer.

## Description

### Technical Field

One or more embodiments relate to an electrochromic device.

### Background Art

An electrochromic material is referred to as a material that reversibly changes color by a direction of electric field through an electrochemical oxidation-reduction reaction when a voltage is applied from an external power source. Such electrochromic material has a characteristic of being colored when an electrical signal is applied externally, or bleached when no electrical signal is applied.

A typical electrochromic device includes an electrochromic (EC) electrode layer and a counter electrode (CE) layer, and these layers are separated by an ionically conductive layer that is highly resistive to electrons and highly conductive to ions.

Electrochromic devices may be manufactured in various ways. For example, a method involving a layer formation process using adsorption suffers from a complex manufacturing process and high production costs, and has a limitation in that such method cannot be applied to flexible devices because of requirement for a high-temperature heat treatment process.

Furthermore, solution-type devices, in which the electrochromic material is dissolved in an electrolyte solution, have limitations in terms of improving precise control and stability of devices.

### Disclosure of Invention

### Technical Problem

One or more embodiments are to provide a low-resistance electrode substrate with improved durability, and an electrochromic device including the same.

### Solution to Problem

An embodiment of the disclosure provides an electrode substrate including a substrate, an engraved provided arranged in the substrate, a first anti-reflection layer arranged in the recess, a first electrode layer arranged to cover the first anti-reflection layer without extending beyond an upper portion of the recess, a second electrode layer having a region overlapping the first electrode layer and arranged on an upper surface of the substrate and a side surface of the recess, and a protection layer arranged at the recess to cover at least a portion of the second electrode layer.

### Advantageous Effects of Invention

An electrode substrate according to the disclosure may achieve reduced starburst effect and improved moiré effect, and the application of the electrode substrate according to an embodiment may allow for the production of an electrochromic device with high reliability and durability even after repeated operation.

### Brief Description of the Drawings

FIG. 1 is a schematic cross-sectional view of an electrode substrate according to an embodiment.
FIG. 2 is a schematic view of an electrode substrate according to another embodiment.
FIG. 3 is a view showing the evaluation results of the moiré effect according to engraved patterns of electrode substrates according to an example and a comparative example.
FIG. 4 is a view showing the evaluation results of the starburst effect according to anti-reflection layers of electrode substrates according to an example and a comparative example.
FIGS. 5 to 7 are images of electrode substrates according to an example and a comparative example based on presence or absence of a protection layer.
FIGS. 8 and 9 are views of the results of confirming coloration and bleaching characteristics of electrode substrates according to an example and a comparative example based on presence or absence of a protection layer.
FIG. 10 is a view of the evaluation results of optimizing the thickness and amount of a protection layer for electrode substrates according to an example and a comparative example.
FIG. 11 is a view of the results of reliability evaluations for electrochromic devices according to an example and a comparative example based on presence or absence of a protection layer.
FIG. 12 is a view showing the evaluation results of the starburst effect according to the types of anti-reflection layers of electrode substrates according to an example and a comparative example.

### <List of Reference Numerals for Major Elements>

10, 10': Electrode substrate
100: Substrate 200; First electrode layer
310: First anti-reflection layer 320; Second anti-reflection layer
400: Second electrode layer 500; Protection layer
600: Recess

### Best mode for Carrying out the Invention

An embodiment of the disclosure provides an electrode substrate including a substrate, an engraved provided arranged in the substrate, a first anti-reflection layer arranged in the recess, a first electrode layer arranged to cover the first anti-reflection layer without extending beyond an upper portion of the recess, a second electrode layer having a region overlapping the first electrode layer and arranged on an upper surface of the substrate and a side surface of the recess, and a protection layer arranged at the recess to cover at least a portion of the second electrode layer.

In an embodiment, the engraved recess may include an irregular pattern.

In an embodiment, the substrate may have a pitch of 200 to 1000 µm.

In an embodiment, the first anti-reflection layer may include graphite, copper oxide (CuO), magnetite (Fe₃O₄), copper selenide (Cu₂Se), or black oxide of zinc.

In an embodiment, the first electrode layer may include at least one of copper, nickel, silver, titanium, chromium, molybdenum, gold, and metal alloys thereof.

In an embodiment, the second electrode layer may have a thickness of 50 to 500 nm.

In an embodiment, the protection layer may be arranged inside and on a side surface of the recess of the second electrode layer.

In an embodiment, the protection layer may have a thickness of less than 1 µm.

In an embodiment, the protection layer may be parallel to an upper surface of the second electrode layer, or an upper surface of the protection layer may have a surface curved upward or downward.

In an embodiment, the electrode substrate may further include a second anti-reflection layer, and a first metal layer may be arranged between the first anti-reflection layer and the second anti-reflection layer.

In an embodiment, the second anti-reflection layer may include graphite, copper oxide (CuO), magnetite (Fe₃O₄), copper selenide (Cu₂Se), or black oxide of zinc.

In an embodiment, a voltage drop of the electrode substrate may be 3.5 to 10 mV.

In an embodiment, transmittance of the electrode substrate may be at least 75%.

Another embodiment of the disclosure provides an electrochromic device including the electrode substrate.

### Mode for the Invention

An embodiment of the disclosure is illustrated in the attached drawings. However, the inventive concept of the disclosure may be embodied in many different forms and should not be construed as being limited to the embodiments set forth herein. Rather, these embodiments are provided so that this disclosure will be thorough and complete, and will fully convey the scope of the inventive concept of the disclosure to those skilled in the art. Like reference numerals refer to like elements.

The terms used herein are intended to describe specific embodiments only and are not intended to limit the inventive concept of the disclosure. The singular form used herein is intended to include the plural form including "at least one" unless the content clearly indicates otherwise. The phrase "at least one" should not be construed as being limited to the singular. As used herein, the term "and/or" includes any and all combinations of one or more of listed items. The terms "comprises" and/or "comprising" used in the detailed description specify the presence of stated features, regions, integers, steps, operations, elements, and/or components, and do not preclude the presence or addition of one or more other features, regions, integers, steps, operations, elements, components, and/or groups thereof.

As used herein, being referred to as "on" or "above" another object includes not only being directly on the other object, but also a case where an intervening object is located.

Throughout the specification, in case that a portion is said to be "connected (accessed, contacted, or coupled)" to another portion, this includes not only being "directly connected" but also being "indirectly connected" with another member arranged therebetween.

Unless otherwise defined, all terms (including technical and scientific terms) used herein have the same meaning as commonly understood by those skilled in the art to which the disclosure pertains. It will be further understood that terms defined in commonly used dictionaries should be construed as having a meaning consistent with their meaning in the context of the relevant technology and the disclosure, and should not be construed in an idealized or overly formal sense.

Although specific embodiments have been described, alternatives, modifications, variations, improvements, and substantial equivalents that are not currently anticipated or may not be anticipated may arise to the applicant or those skilled in the art. Therefore, the appended claims as filed and as may be amended are intended to include all such alternatives, modifications, variations, improvements, and substantial equivalents.

In the following embodiments, the terms "first," "second," and the like are not used in a restrictive sense and are used to distinguish one element from another.

The singular forms as used herein are intended to include the plural forms as well unless the context clearly indicates otherwise.

Sizes of elements in the drawings may be exaggerated for convenience of explanation. For example, the sizes and/or thicknesses of the respective elements shown in the drawings are arbitrarily given for convenience of explanation, and therefore, the disclosure is not limited to those illustrated.

In the following embodiments, the x-axis, the y-axis, and the z-axis are not limited to three axes of an orthogonal coordinate system, but may be construed in a broad sense that includes such axes. For example, the x-axis, the y-axis, and the z-axis may be orthogonal to each other, but may also refer to different directions that are not orthogonal to each other.

In a case where a specific embodiment may be implemented differently, specific process sequences may be performed in a different order from the order described. For example, two processes described in succession may be carried out substantially at the same time or may be performed in a reverse order to the described order.

An electrode substrate according to an embodiment may include an engraved recess, a substrate having the recess, a first anti-reflection layer arranged in the recess, a first electrode layer arranged in the recess, a second electrode layer having a region overlapping the first electrode layer, and a protection layer arranged at the recess to cover the second electrode layer.

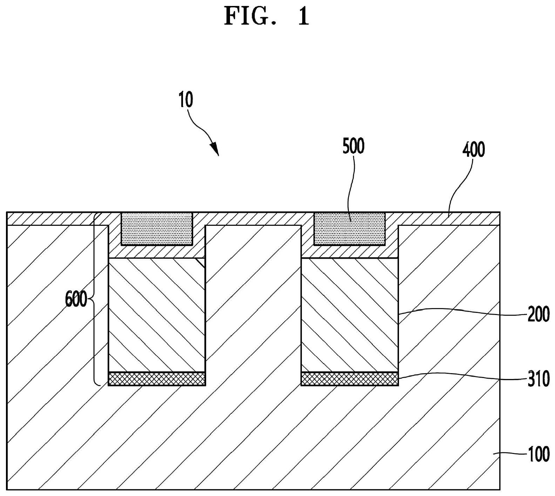

FIG. 1 is a schematic cross-sectional view of an electrode substrate according to an embodiment.

According to FIG. 1, an electrode substrate 10 may include a substrate 100, a first electrode layer 200, a first anti-reflection layer 310, a second electrode layer 400, and a protection layer 500.

The substrate 100 may include a recess 600, and the recess may be an engraved recess. The engraved recess may be arranged as one recess or a plurality of recesses, and may include an irregular pattern. The substrate may include an irregular engraved recess, which may improve the moiré effect.

The substrate 100 may be formed using various materials. For example, such various materials may include, but are not limited to, glass, polyethyleneterephthalate (PET), polyurethane (PU), polycarbonate (PC), acrylic (PMMA), polyvinyl chloride (PVC), polypropylene (PP), acrylonitrile, butadiene, styrene (ABS) resin, polyamide (PA), polyethylene (PE), polystyrene (PS), polyethylene naphthalate (PEN), polyether sulfone (PES), cyclic olefin copolymer (COC), triacetylcellulose (TAC), polyvinyl alcohol (PVA), polyimide (PI), polyolefin (POF), polyetheretherketone (PEEK), polyetherimide (PEI), or fluoride resin. According to an embodiment, the substrate may be a transparent substrate.

The substrate 100 may have a pitch of 100 to 1000 µm, 100 to 900 µm, 100 to 800 µm, 100 to 700 µm, 100 to 600 µm, 100 to 500 µm, 200 to 1000 µm, 200 to 900 µm, 200 to 800 µm, 200 to 700 µm, 200 to 600 µm, 200 to 500 µm, 400 to 1000 µm, 400 to 900 µm, 400 to 800 µm, 400 to 700 µm, 400 to 600 µm, 400 to 500 µm, 500 to 1000 µm, 500 to 900 µm, 500 to 800 µm, 500 to 700 µm, or 500 to 600 µm, but is not limited thereto.

The first anti-reflection layer 310 may be arranged in the recess 600 and may be placed in contact with the substrate as in FIG. 1, but is not limited thereto.

The first anti-reflection layer 310 may include graphite, copper oxide (CuO), magnetite (Fe₃O₄), copper selenide (Cu₂Se), or black oxide of zinc, but is not limited thereto. According to an embodiment, the first anti-reflection layer may be graphite.

The first anti-reflection layer 310 may have a thickness of 2 µm or less, 0.1 to 2 µm, 0.5 to 2 µm, 1 to 2 µm, 1.5 to 2 µm, 0.1 to 1.5 µm, 0.5 to 1.5 µm, 1 to 1.5 µm, 0.1 to 1 µm, 0.5 to 1 µm, 0.1 to 0.6 µm, 0.5 to 0.6 µm, or 0.1 to 0.3 µm, but is not limited thereto.

As described above, the electrode substrate according to the disclosure may include the first anti-reflection layer, which may reduce light reflection, resulting in mitigation of the starburst effect.

The first electrode layer 200 may be positioned to cover the first anti-reflection layer 310 and may not extend beyond an upper portion of the recess 600.

The first electrode layer 200 may include at least one of copper, nickel, silver, titanium, chromium, molybdenum, gold, and metal alloys thereof, but is not limited thereto. According to an embodiment, the first electrode layer may include silver.

The second electrode layer 400 may have a region overlapping the first electrode layer 200, and, as shown in FIG. 1, may include an upper surface of the substrate 100, a side surface of the recess 600, and a region which overlaps the first electrode layer 200, but is not limited thereto.

The second electrode layer 400 may include, but is not limited to, indium tin oxide (ITO), indium zinc oxide (IZO), fluorine tin oxide (FTO), copper oxide (CuO), Cu₂O, zinc oxide (ZnO), titanium oxide (TiO₂), AgO, Ag₂O, Ag₂O₃ , Al₂O₃ , WO₂, WO₃, W₂O₃, MgO, MoO₃, SnO₂, In₂O₃, CrO₃, Cr₂O₃, Sb₂O₃, Sb₂O₅, NiO, Cu₂O, V₂O₃, V₂O₅, CoO, Fe₂O₃, Fe₃O₄, Nb₂O₅, aluminum doped zinc oxide (ZAO), aluminum tin oxide (TAO), antimony tin oxide (ATO), nanowires, photosensitive nanowire films, carbon nano tube (CNT), graphene, or mixtures thereof. According to an embodiment, the second electrode layer may be ITO.

The second electrode layer 400 may have a thickness of 50 to 500 nm, 100 to 500 nm, 150 to 500 nm, 50 to 400 nm, 100 to 400 nm, 150 to 400 nm, 50 to 300 nm, 100 to 300 nm, or 150 to 300 nm, but is not limited thereto.

The protection layer 500 may be arranged inside and on the side surface of the recess 600 where the second electrode layer 400 is located, and may be arranged inside the recess 600 and on at least a portion of the upper surface of the substrate 100 as shown in FIG. 1, but is not limited thereto.

The protection layer 500 may include, but is not limited to, carbon nanotube, PEDOT-PSS, poly(3,4-ethylene dioxythiophene), polyacetylene, polyaniline, polypyrrole, polythiophene, polycarbazole derivative, phenylene vinylene derivative, acetylene derivative, phenylenediamine derivative, phenothiazine derivative, tetrathiafulvalene derivative, poly(fluorine), polyphenylene, polypyrene, polyazulene, polynaphthalene, polycarbazole, polyindole, polyazepine, polyaniline, poly(p-phenylene sulfide), poly(acetylene), or poly(p-phenylene vinylene). According to an embodiment, the protection layer may be carbon nanotube, PEDOT-PSS, or AgNW.

The protection layer 500 may have a thickness of less than 1.5 µm, less than 1 µm, 0.2 to 1.5 µm, 0.2 to 1 µm, 0.2 to 0.5 µm, 0.3 to 1.5 µm, 0.3 to 1 µm, or 0.3 to 0.5 µm, but is not limited thereto. According to an embodiment, the thickness of the protection layer may be 0.3 to 1 µm.

The protection layer 500 may be parallel to an upper surface of the second electrode layer 400 as shown in FIG. 1, or an upper surface of the protection layer 500 may have a surface curved upward or downward.

As described above, the electrode substrate according to the disclosure may include a protection layer and exhibit excellent coloration and bleaching effects, and in case of being applied to an electrochromic device, may achieve improved reliability even during repeated operation.

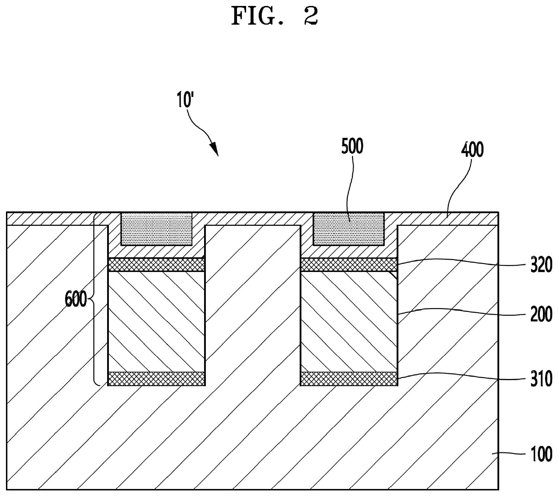

FIG. 2 is a schematic cross-sectional view of an electrode substrate according to another embodiment.

According to FIG. 2, the electrode substrate 10' may further include a second anti-reflection layer 320, and a first metal layer 200 may be arranged between the first anti-reflection layer 310 and the second anti-reflection layer 320.

The second anti-reflection layer 320 may be the same as or different from the first anti-reflection layer 310, and may include graphite, copper oxide (CuO), magnetite (Fe₃O₄), copper selenide (Cu₂Se), or black oxide of zinc. According to an embodiment, the second anti-reflection layer may be graphite.

The second anti-reflection layer 320 may have a thickness which is the same as or different from the thickness of the first anti-reflection layer 310. In some embodiments, the second anti-reflection layer 320 may have a thickness of 2 µm or less, 0.1 to 2 µm, 0.5 to 2 µm, 1 to 2 µm, 1.5 to 2 µm, 0.1 to 1.5 µm, 0.5 to 1.5 µm, 1 to 1.5 µm, 0.1 to 1 µm, 0.5 to 1 µm, 0.1 to 0.6 µm, 0.5 to 0.6 µm, or 0.1 to 0.3 µm, but is not limited thereto.

As described above, the electrode substrate according to the disclosure may include the first anti-reflection layer and the second anti-reflection layer, which may reduce light reflection, resulting in mitigation of the starburst effect. In some embodiments, in case of further including the second anti-reflection layer as shown in FIG. 2, light reflection may be suppressed more effectively.

In FIG. 2, the electrode substrate 10', the first electrode layer 200, the first anti-reflection layer 310, the second electrode layer 400, and the protection layer 500 may be applied in the same way as in the previously described embodiment or by being modified as necessary, so a more detailed description is omitted.

Another embodiment of the disclosure may provide an electrochromic device which includes the electrode substrate 10, 10'.

The electrochromic device may include a cathodic electrochromic layer and an anodic electrochromic layer, and the electrode substrate 10, 10' may be applied to both the cathodic electrochromic layer and the anodic electrochromic layer.

A voltage drop of the electrode substrate may be 3.5 to 10 mV, 4 to 10 mV, 4.5 to 10 mV, 3.5 to 8 mV, 4 to 8 mV, 4.5 to 8 mV, 3.5 to 6 mV, 4 to 6 mV, or 4.5 to 6 mV, but is not limited thereto. According to an embodiment, the voltage drop of the electrode substrate may be 3.5 to 5 mV.

Transmittance of the electrode substrate may be at least 75%, 75 to 85%, or 75 to 80%, but is not limited thereto. According to an embodiment, the transmittance of the electrode substrate may be 75 to 80%. In the electrode substrate, in case that the pitch of the substrate is 300 µm or less, the transmittance may decrease rapidly.

Hereinafter, the disclosure will be described through examples and experimental examples.

However, the following examples and experimental examples are provided to illustrate the disclosure in one aspect, and the disclosure is not limited thereto.

### <Example 1> Fabrication of electrode substrate

To fabricate an electrode substrate according to an example, a substrate, a hard mold, and a soft mold were prepared. PET was used for the substrate, aluminum for the hard mold, and UV resin for the soft mold. A master mold and the soft mold included irregular patterns.

Subsequently, the substrate and the molds were laminated, followed by UV irradiation to form an irregular engraved recess. Afterwards, lamination, cleaning, and sintering processes were repeated for each of a first anti-reflection layer, a first electrode layer, a second electrode layer, and a protection layer. At this time, a sintering temperature was 100 to 150 degrees.

As an example and a comparative example, electrode substrates were fabricated by varying the presence or type of a stacked layer, such as an anti-reflection layer.

### <Example 2> Fabrication of electrochromic device

After preparing the electrode substrate according to an example, the substrate was cleaned with ethanol and acetone. Afterwards, the substrate was cut and machined to form holes. An optically clear adhesive (OCA) was cut and placed on a quadrangular face at a periphery of a coloring area of the substrate.

After bonding the substrates in a sandwich form, a coloring solution was injected. At this time, the coloring solution was prepared by mixing an organic cathodic electrochromic material (ethyl viologen dibromide), an oxidizing agent (dimethylferrocene), a lithium salt, and a solvent. Subsequently, the holes were sealed to fabricate an electrochromic device.

### <Experimental Example 1> Evaluation of moiré effect according to engraved pattern

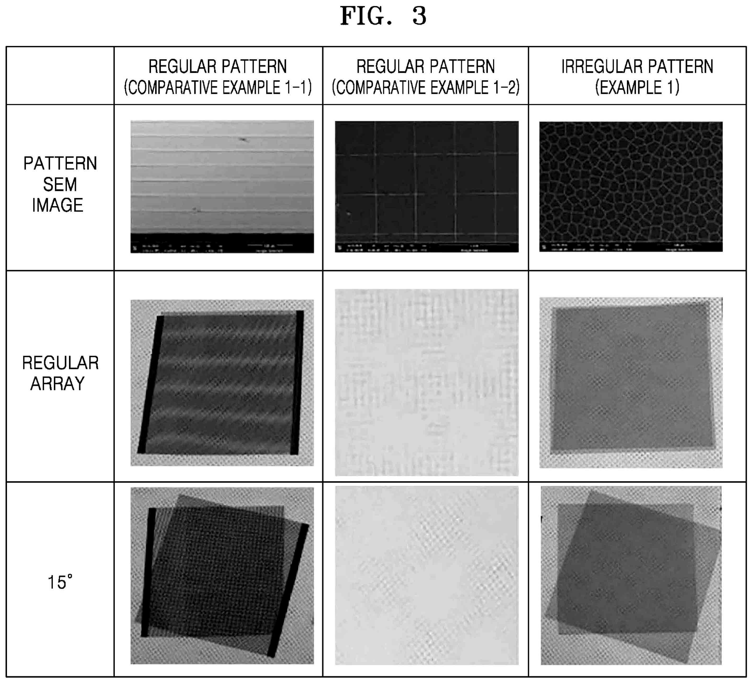

The moiré effect according to an engraved pattern was evaluated for an electrode substrate according to an example, and scanning electron microscope (SEM) results were shown in FIG. 3.

As shown in FIG. 3, it may be seen that the moiré effect is significantly reduced in case that the electrode substrate includes a recess with an irregular pattern, as shown in the example, compared to a regular pattern.

### <Experimental Example 2> Evaluation of starburst effect according to anti-reflection layer

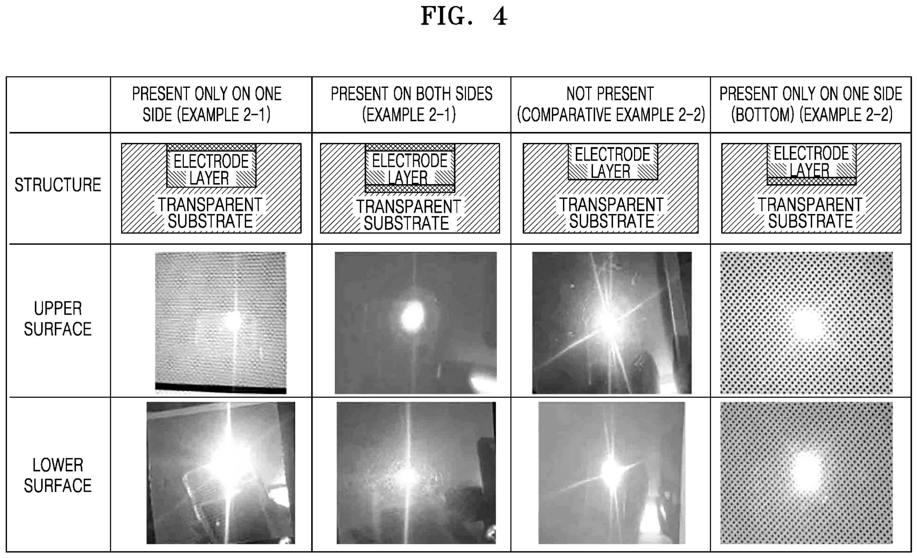

The starburst effect was evaluated for the electrode substrate according to an example based on the presence or absence of an anti-reflection layer and the number of anti-reflection layers. The results were shown in FIG. 4.

As shown in FIG. 4, it may be seen that the starburst effect is significantly mitigated in case that the anti-reflection layer is present, for example, in case that the anti-reflection layer is present only below the first electrode layer as in the example or on opposite sides of the first electrode layer. It is confirmed that this is because light reflection is reduced by a blackening effect due to the anti-reflection layer.

### <Experimental Example 3> Transmittance and voltage drop analysis

Transmittance and voltage drop were analyzed for the electrode substrate according to an example. The analysis results were shown in Table 1 below.

**[Table 1]**

| Substrate | Pitch (µm) | Line width (µm) | Number of grids | Voltage drop (mV) | TT (%) | x (Area ratio (%)) |
|---|---|---|---|---|---|---|
| 300 | 1000 | 10 | 299 | 9.16 | 78 | 2 |
| 300 | 900 | 10 | 332 | 8.23 | 77.8 | 2.2 |
| 300 | 800 | 10 | 374 | 7.33 | 77.5 | 2.5 |
| 300 | 700 | 10 | 428 | 6.42 | 77.2 | 2.8 |
| 300 | 600 | 10 | 499 | 5.5 | 76.7 | 3.3 |
| 300 | 500 | 10 | 599 | 4.58 | 76 | 4 |
| 300 | 400 | 10 | 749 | 3.66 | 75.1 | 4.9 |
| 300 | 300 | 10 | 999 | 2.75 | 73.4 | 6.6 |
| 300 | 200 | 10 | 1499 | 1.83 | 70.2 | 9.8 |
| 300 | 100 | 10 | 2999 | 0.92 | 61 | 19 |

As shown in Table 1, it was confirmed that the transmittance varied depending on the pitch of the substrate, and the transmittance of the electrode substrate according to an example was 73 to 80%.

As shown in Table 1, it was confirmed that the voltage drop varied depending on the pitch of the substrate, and for example, in case that the pitch was 400 µm and 500 µm, the voltage drop was 3.56 mV and 4.58 mV, respectively, showing significantly low results.

### <Experimental Example 4> Image analysis based on presence or absence of protection layer

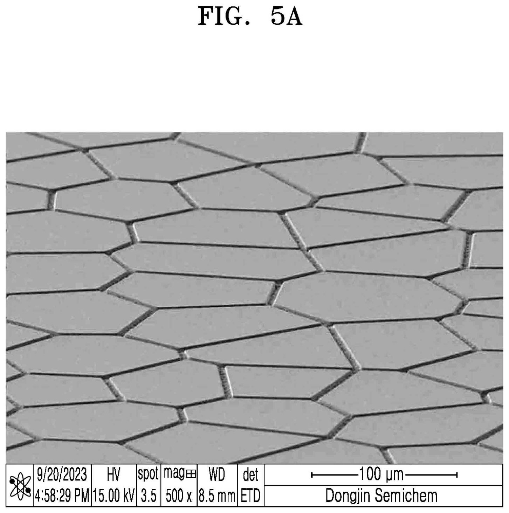

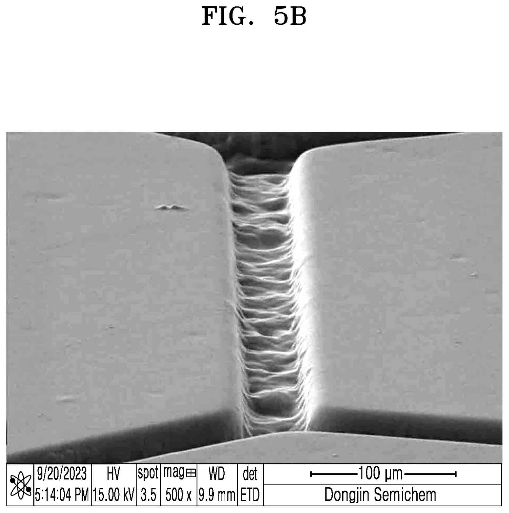

SEM images depending on presence or absence of a protection layer were analyzed for the electrode substrate according to an example. The analysis results were shown in FIGS. 5 to 7.

As shown in FIGS. 5A and 5B, it may be confirmed that neither Ag leaching nor cracking occurred in case that a protection layer was present.

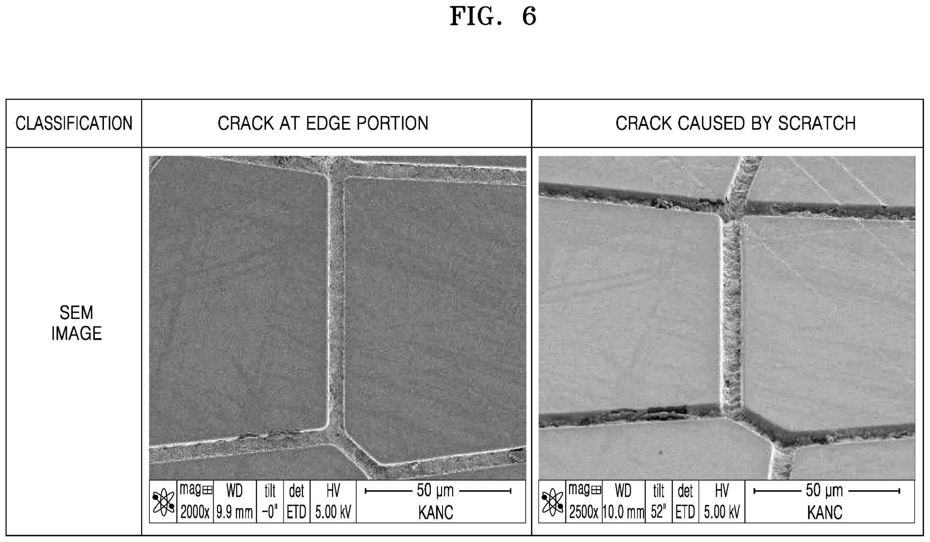

As shown in FIG. 6, it may be confirmed that in case that only the second electrode layer was present without a protection layer, cracks occurred at edge portions and these cracks were caused by scratches.

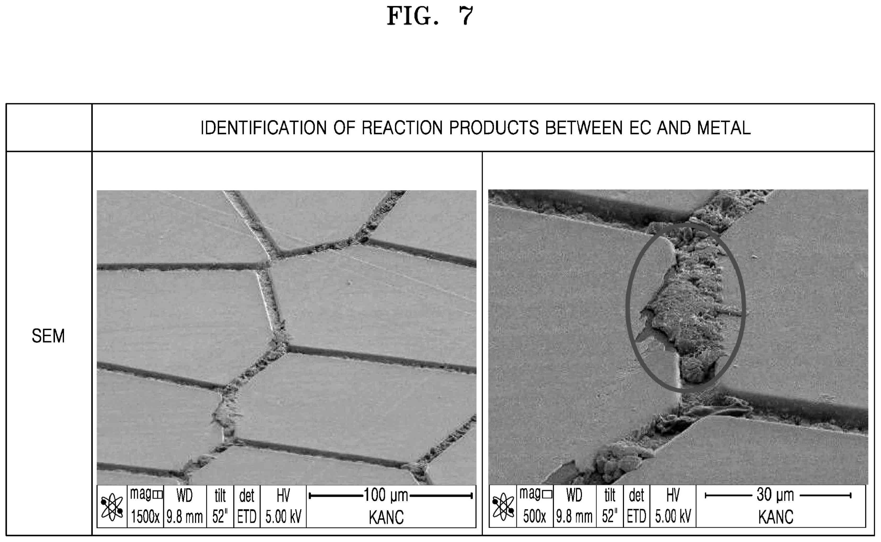

As shown in FIG. 7, it was confirmed that in case that only the second electrode layer was present without a protection layer, the metal of the first electrode layer leached out, which caused deterioration.

Therefore, it may be confirmed that the inclusion of the protection layer in addition to the second electrode layer, as in an example, suppresses crack generation and deterioration.

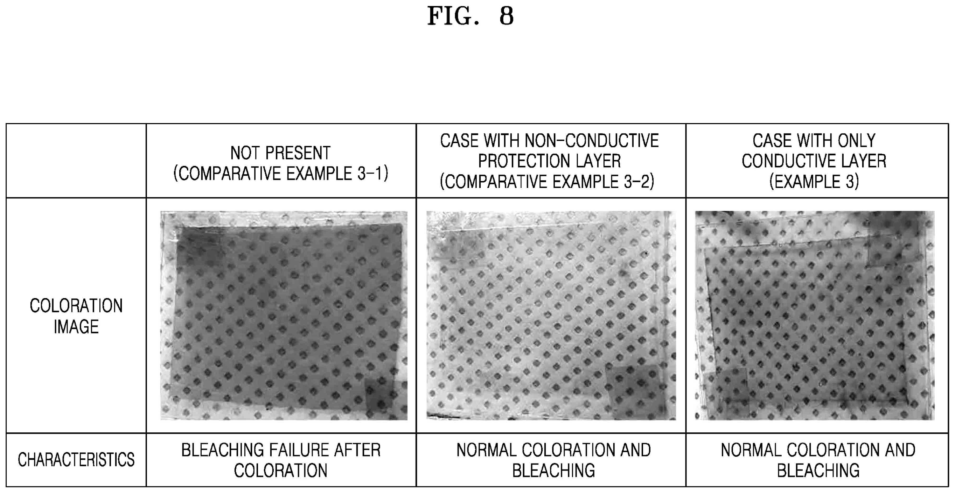

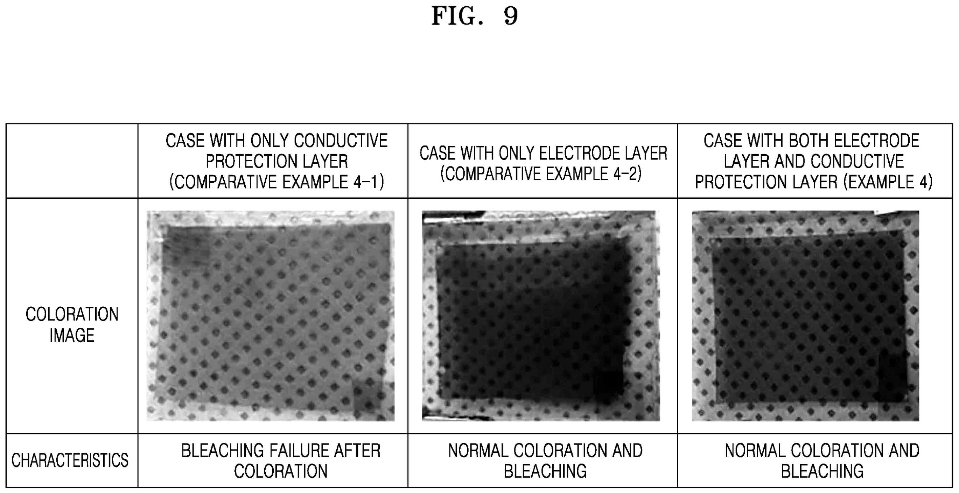

In some embodiments, the coloration and bleaching characteristics according to the presence or absence of a protection layer were confirmed, and the results were shown in FIGS. 8 and 9.

As shown in FIGS. 8 and 9, it may be confirmed that the coloration and bleaching characteristics are reduced in case that a protection layer is not present and in case that a non-conductive protection layer is present. Therefore, it may be confirmed that the coloration and bleaching characteristics are improved in case that both the second electrode layer and the protection layer are included as in an example, and the protection layer is a conductive protection layer.

### <Experimental Example 5> Optimization evaluation for thickness and amount of protection layer

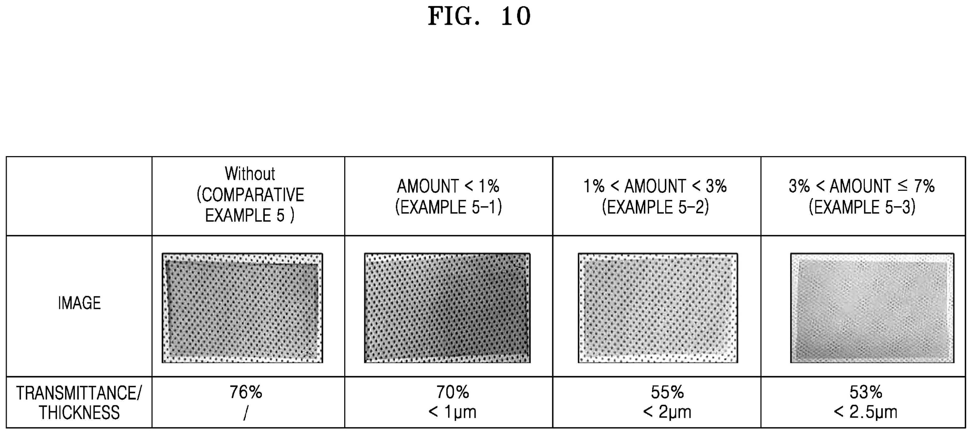

For the electrode substrate according to an example, a thickness of a protection layer and an amount of a protection layer material were optimized, and the results were shown in FIG. 10.

As shown in FIG. 10, as the amount of the protection layer material increased, the transmittance decreased, and accordingly, the thickness also increased. Considering the transmittance, the optimized thickness of the protection layer was less than 1 µm, and the amount of the protection layer material was less than 1%.

### <Experimental Example 6> Evaluation of coloration and bleaching characteristics according to type of protection layer

For the electrode substrate according to an example, coloration and bleaching characteristics according to a type of a protection layer were evaluated, and the results were shown in Table 2 below.

**[Table 2]**

| Type | Coloration | Bleaching |
|---|---|---|
| w/o protection layer | 4.5 | 48.1 |
| PEDOT-PSS | 3.6 | 45.8 |
| CNT | 2.7 | 42.1 |
| AgNW | 3.5 | 42.5 |

In Table 2, the coloration and bleaching effects were evaluated based on transmittance (%), and it may be confirmed that the coloration and bleaching effects are significantly superior in case of the presence of the protection layer, compared to a case of the absence of the protection layer.

### <Experimental Example 7> Reliability evaluation based on presence or absence of protection layer

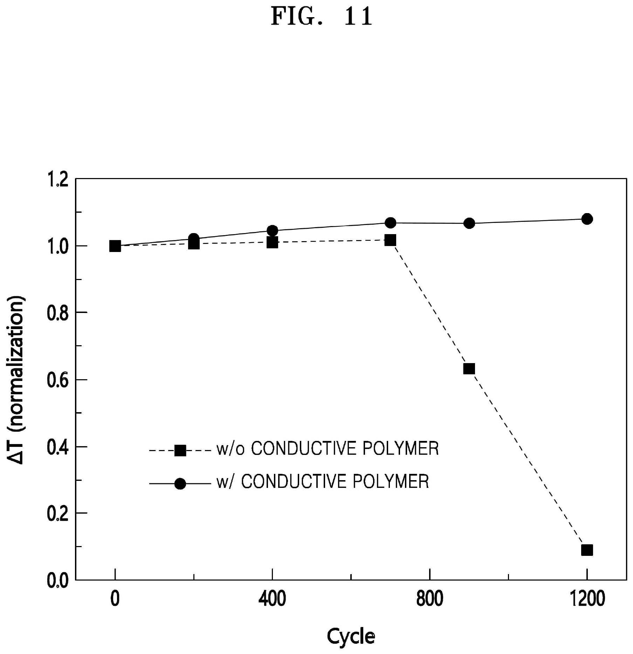

For the electrochromic device according to an example, reliability was evaluated based on presence or absence of a protection layer. The reliability evaluation was performed by measuring the change in transmittance (△T) after repeatedly operating the electrochromic device, and the results were normalized and shown in Table 3 and FIG. 11.

**[Table 3]**

| Number | w/o conductive protection layer | w/ conductive protection layer |
|---|---|---|
| 1 | 1 | 1 |
| 200 | 1.00384 | 1.01896 |
| 400 | 1.0096 | 1.04265 |
| 700 | 1.01536 | 1.06635 |
| 900 | 0.6334 | 1.06635 |
| 1200 | 0.09021 | 1.0782 |

As shown in Table 3 and FIG. 11, it may be confirmed that in case that the electrochromic device includes a conductive protection layer as in an example, △T remains substantially unchanged even after repeated operation, indicating high reliability.

### <Experimental Example 8> Evaluation of starburst effect according to type of anti-reflection layer

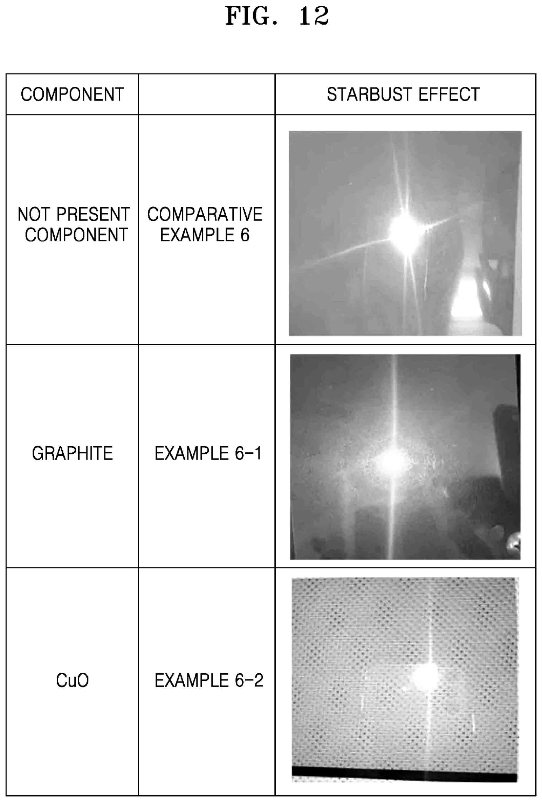

The starburst effect according to the type of an anti-reflection layer was evaluated for the electrode substrate according to an example. The results were shown in FIG. 12.

As shown in FIG. 12, it can be confirmed that in case that the anti-reflection layer is graphite or CuO, the starburst effect is significantly mitigated compared to a case that an anti-reflection layer is not present. It is confirmed that this is because light reflection is reduced by a blackening effect due to the anti-reflection layer.

### <Experimental Example 9> Evaluation of coloration and bleaching characteristics according to type of first electrode layer

For the electrode substrate according to an example, coloration and bleaching characteristics according to the type of a first electrode layer were evaluated, and the results were shown in Table 4 below.

**[Table 4]**

| Component | Coloration | Bleaching |
|---|---|---|
| Not present | 39 | 77.7 |
| Ag | 4.5 | 48.1 |
| Cu | 6.5 | 47.5 |
| Ni | 5.8 | 49.2 |
| CuNi | 5.0 | 49.3 |

In Table 4, the coloration and bleaching effects were evaluated based on transmittance (%), and it may be confirmed that the coloration and bleaching effects are significantly superior in case that the first electrode layer is present, compared to a case that the first electrode layer is not present.

### <Experimental Example 10> Evaluation of coloration and bleaching characteristics according to thickness of second electrode layer

For the electrode substrate according to an example, coloration and bleaching characteristics according to a thickness of a second electrode layer were evaluated, and the results were shown in Table 5 below.

**[Table 5]**

| Thickness of second electrode layer | Coloration | Bleaching |
|---|---|---|
| Not present | 20 | 24 (Bleaching failure) |
| ITO 50 nm | 3.6 | 49.1 |
| ITO 200 nm | 4.5 | 48.1 |
| ITO 400 nm | 4.6 | 46.9 |
| ITO 500 nm | 4.7 | 44.7 |

In Table 5, the coloration and bleaching effects were evaluated based on transmittance (%), and it may be confirmed that the coloration and bleaching effects are significantly superior in case that the second electrode layer is present and has a thickness of 50 to 500 nm, compared to a case that the second electrode layer is not present.

The foregoing description of the disclosure is for illustrative purposes only, and those skilled in the art to which the disclosure pertains will understand that the disclosure can be easily modified into other specific forms without changing the technical idea or essential features of the disclosure. Therefore, it should be understood that the embodiments described above are illustrative in all respects and not restrictive. For example, elements described as singular may be implemented in a distributed manner, and likewise, elements described as distributed may be implemented in a combined form.

The scope of the disclosure is indicated by the claims set forth below, and it should be construed that all changes or modifications derived from the meaning and scope of the claims and equivalents thereof are included in the scope of the disclosure.

## Claims

1. An electrode substrate comprising:
a substrate;
an engraved recess provided in the substrate;
a first anti-reflection layer arranged in the recess;
a first electrode layer positioned to cover the first anti-reflection layer without extending beyond an upper portion of the recess;
a second electrode layer having a region overlapping the first electrode layer and arranged on an upper surface of the substrate and a side surface of the recess; and
a protection layer arranged at the recess to cover at least a portion of the second electrode layer.

2. The electrode substrate of claim 1, wherein
the engraved recess comprises an irregular pattern.

3. The electrode substrate of claim 1, wherein
the substrate has a pitch of 200 to 1000 µm.

4. The electrode substrate of claim 1, wherein
the first anti-reflection layer comprises graphite, copper oxide (CuO), magnetite (Fe₃O₄), copper selenide (Cu₂Se), or black oxide of zinc.

5. The electrode substrate of claim 1, wherein
the first electrode layer comprises at least one of copper, nickel, silver, titanium, chromium, molybdenum, gold, and metal alloys thereof.

6. The electrode substrate of claim 1, wherein
the second electrode layer has a thickness of 50 to 500 nm.

7. The electrode substrate of claim 1, wherein
the protection layer is arranged inside and on a side surface of the recess where the second electrode layer is arranged.

8. The electrode substrate of claim 1, wherein
the protection layer has a thickness of less than 1 µm.

9. The electrode substrate of claim 1, wherein
the protection layer is parallel to an upper surface of the second electrode layer, or
an upper surface of the protection layer has a surface curved upward or downward.

10. The electrode substrate of claim 1, further comprising
a second anti-reflection layer,
wherein a first metal layer is arranged between the first anti-reflection layer and the second anti-reflection layer.

11. The electrode substrate of claim 10, wherein
the second anti-reflection layer comprises graphite, copper oxide (CuO), magnetite (Fe₃PO₄), copper selenide (Cu₂Se), or black oxide of zinc.

12. The electrode substrate of claim 1, wherein
a voltage drop of the electrode substrate is 3.5 to 10 mV.

13. The electrode substrate of claim 1, wherein
a transmittance of the electrode substrate is at least 75%.

14. An electrochromic device comprising the electrode substrate
according to any one of claims 1 to 13.
